# EUROPÄISCHE PATENTSCHRIFT

(11) **EP 2 054 277 B1**
(45) Veröffentlichungstag und Bekanntmachung des Hinweises auf die Patenterteilung: **13.08.2014**
(21) Anmeldenummer: 07730246.1
(22) Anmeldetag: 19.06.2007
(51) Int. Cl.: B60S 1/38

(54) **WISCHBLATT**
WIPER BLADE
RACLETTE D'ESSUIE-GLACE

(30) Priorität: 18.08.2006 DE 102006038828
(43) Veröffentlichungstag der Anmeldung: 06.05.2009
(73) Patentinhaber: Robert Bosch GmbH, 70442 Stuttgart (DE)
(72) Erfinder: JANSSIS, Yves, B-3800 Sint-truiden (BE); WILMS, Christian, B-3582 Koersel-beringen (BE); VERELST, Hubert, B-3300 Tienen (BE); HERINCKX, Dirk, B-3350 Drieslinter (BE); VAN BAELEN, David, B-3020 Winksele (BE); BRATEC, Hervé, B-3012 Wilsele (BE)
(86) Internationale Anmeldenummer: PCT/EP2007/056070
(87) Internationale Veröffentlichungsnummer: WO 2008/019903

(56) Entgegenhaltungen:
- EP-A1- 1 541 433
- EP-A2- 1 050 441
- DE-A1- 10 340 140
- DE-U1-202006 009 435
- US-A1- 2002 053 112

## Beschreibung

### Stand der Technik

Die Erfindung geht von einem Wischblatt nach dem Oberbegriff des Anspruchs 1 aus.

Aus der DE 103 40 140 A1 ist ein Wischblatt nach dem Oberbegriff von Anspruch 1 bekannt. Neben den Aussparungen in Form von Bohrungen, Ausklinkungen oder dgl. besitzen die Spoilerteile an ihren äußeren Enden Endkappen. Durch die Öffnungen im Bereich des Anschlusselements und/oder des Spoilers wird der Unterdruck auf der Rückseite des Spoilers beim Anströmen reduziert und das Wischergebnis verbessert, indem ein Zurückziehen von Wasser vermieden wird. Die Öffnungen sind gleichmäßig über die Länge des Spoilers verteilt oder zum Anschlusselement hin mit abnehmendem Abstand angeordnet.

Ferner ist aus der DE 198 01 058 A1 ein Wischblatt in Flachbalkenbauweise bekannt, dessen bandartig lang gestreckte Federschiene von einer Kunststoffumhüllung umgeben ist. An dieser ist ein Spoilerprofil angeformt. Um die Elastizität der Federschiene nicht zu beeinträchtigen, besitzen die Kunststoffumhüllung und das Spoilerprofil Querschlitze, die von den äußeren Deckwänden bis in den Bereich der Federschienen verlaufen. Die Kunststoffumhüllung ist im mittleren Bereich geteilt. Die Teile werden bei der Montage von den Enden über die Federschiene gestreift und an den Stoßstellen miteinander verbunden, z.B. durch Kleben, Schweißen oder dgl. Bei einer Ausgestaltung ist an einem der Umhüllungsteile an dem dem anderen Umhüllungsteil zugewandten Ende ein Anschlusselement angeformt. Dieses besitzt eine Rastnase, die mit einer Öse am Ende des anderen Umhüllungsteils eine Klippverbindung bildet. Sowohl die Höhe als auch die Breite der Kunststoffumhüllung nehmen von den äußeren Enden zum Anschlusselement hin ab.

Aus der US 2002/053112 A1 ist ein gattungsgemäßes Wischblatt bekannt. Dabei weisen die Spoilerteile Einschnitte auf, die vom Kamm ausgehen und sich ein Stück weit in die Richtung auf die Wischleiste erstrecken. Sie sind in Längsrichtung über die Spoilerteile so verteilt, dass ihre Abstände zueinander sich ausgehend vom Anschlusselement zu den freien Enden hin verringern, sodass die Anzahl der Einschnitte pro Längeneinheit zu den äußeren Enden hin zunimmt. Die Einschnitte sollen die Nachgiebigkeit des Wischblatts besseren, sodass es sich unter dem Anpressdruck leichter an gekrümmte Fahrzeugscheiben anlegen kann.

### Offenbarung der Erfindung

Nach der Erfindung sind die Aussparungen überwiegend in den äußeren Endbereichen der Spoilerteile angeordnet.

Unter anderem ist die Wischqualität bei hohen Geschwindigkeiten ein bedeutendes Problem beim Design und bei der Dimensionierung von Wischersystemen. Insbesondere bei ungünstiger Anströmung des Wischers während der Wischbewegung können die Kräfte, die den Wischer von der Fahrzeugscheibe abzuheben versuchen, die Kräfte überwiegen, die den Wischer gegen die Fahrzeugscheibe drücken. Dieser Vorgang wird besonders an den Enden des Wischblatts beobachtet, und zwar vor allem an dem Ende, das einer Rotationsachse des Scheibenwischers am nächsten liegt. Durch das Entlasten der Enden des Wischblatts wird die Wischqualität in diesen Betriebsbereichen deutlich verschlechtert. Durch die Anordnung der Aussparungen überwiegend in den Endbereichen der Spoilerteile, wird die Luftströmung so beeinflusst, dass auch in den kritischen Betriebsbereichen die Enden des Wischblatts mit einem ausreichenden Anpressdruck an der Windschutzscheibe anliegen.

In vielen Fällen reicht es aus, dass die Aussparungen in einen Kamm mindestens einer Endkappe eingearbeitet sind, vorzugsweise an der Endkappe, die der Rotationsachse des Scheibenwischers benachbart ist. Die Aussparungen können sich über den gesamten Verlauf des Kamms einschließlich der stirnseitigen Abschlusswände erstrecken. Um die Wirkung der Aussparungen zu modifizieren, ist es vorteilhaft, dass die Endkappen Fortsätze in Längsrichtung aufweisen, die an ihren Kämmen ebenfalls Aussparungen besitzen. Die Endkappen schließen die Spoilerteile zu den äußeren Enden hin ab, wobei die Fortsätze die Spoilerteile in Längsrichtung überdecken. Zweckmäßigerweise entspricht die Länge der Fortsätze ungefähr der Länge der übrigen Endkappe. Die Fortsätze können jedoch bei Bedarf auch länger ausgeführt werden. Es kann auch vorteilhaft sein, gegebenenfalls die Endkappe und ihren Fortsatz an dem zugeordneten Spoilerteil einstückig anzuformen. Ferner kann die Wirkung durch die Gestaltung der Aussparungen modifiziert werden. Zweckmäßigerweise sind die Aussparungen Kerben, die sich zum Kamm der Spoilerteile hin erweitern und deren Abstand voneinander zum Ende des Spoilerteils kleiner wird.

Die Gestaltung und Dimensionierung der Aussparungen kann auch dazu verwendet werden, die Flexibilität der Spoilerteile zu erhöhen, sodass sie den Anpresskräften der Federschienen einen geringeren Widerstand entgegensetzen. Hierzu kann es auch vorteilhaft sein, dass die Höhe und/oder Breite und/oder die Materialstärke der Spoilerteile zum Ende des Wischblatts abnehmen.

Um die Spoilerteile einfach zu montieren, werden sie von den Enden der Wischleiste und der Federschiene bzw. den Federschienen aufgeschoben. Die Spoilerteile besitzen an den einander zugewandten Abschlusswänden Vorsprünge, die über Rastmittel miteinander verbunden sind. Die Spoilerteile werden durch ein Anschlusselement verriegelt, indem sie an den einander zugewandten Abschlusswänden Vorsprünge besitzen, die an einer Trennfuge im Bereich von Seitenwangen seitlich vorstehende Nocken haben, die in eine Aussparung des Anschlusselements passen. Das Anschlusselement seinerseits wird durch Federzungen mit Rasthaken gesichert, die an den Stirnseiten des Anschlusselements angeformt sind und bei der Montage in Fenster in den Abschlusswänden der Spoilerteile einrasten. Das Anschlusselement ist gegenüber den Spoilerteilen durch Führungsrippen und Schlitze geführt, die an den Abschlusswänden der Spoilerteile bzw. an den Stirnseiten des Anschlusselements vorgesehen sind.

### Kurze Beschreibung der Zeichnungen

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
Fig. 1 ein erfindungsgemäßes Wischblatt in Explosionsdarstellung,

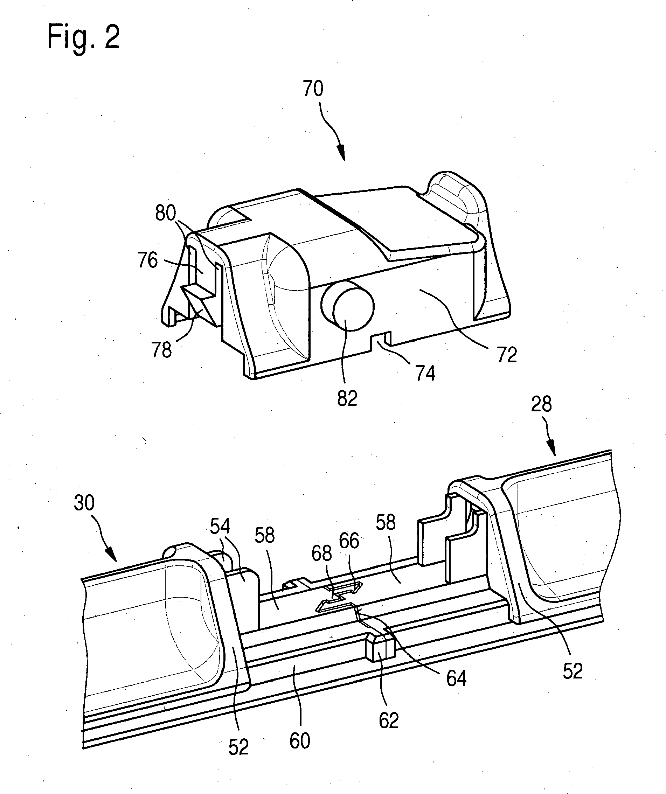

Fig. 2 einen mittleren Teil eines Wischblatts nach Fig. 1 in vergrößertem Maßstab,
Fig. 3 eine perspektivische Darstellung eines Wischblatts nach Fig. 1 mit einem montierten Spoilerteil,
Fig. 4 eine Ansicht in Richtung eines Pfeils IV wie Fig. 3 und
Fig. 5 und Fig. 6 eine Endkappe für ein erfindungsgemäßes Wischblatt.

### Ausführungsformen der Erfindung

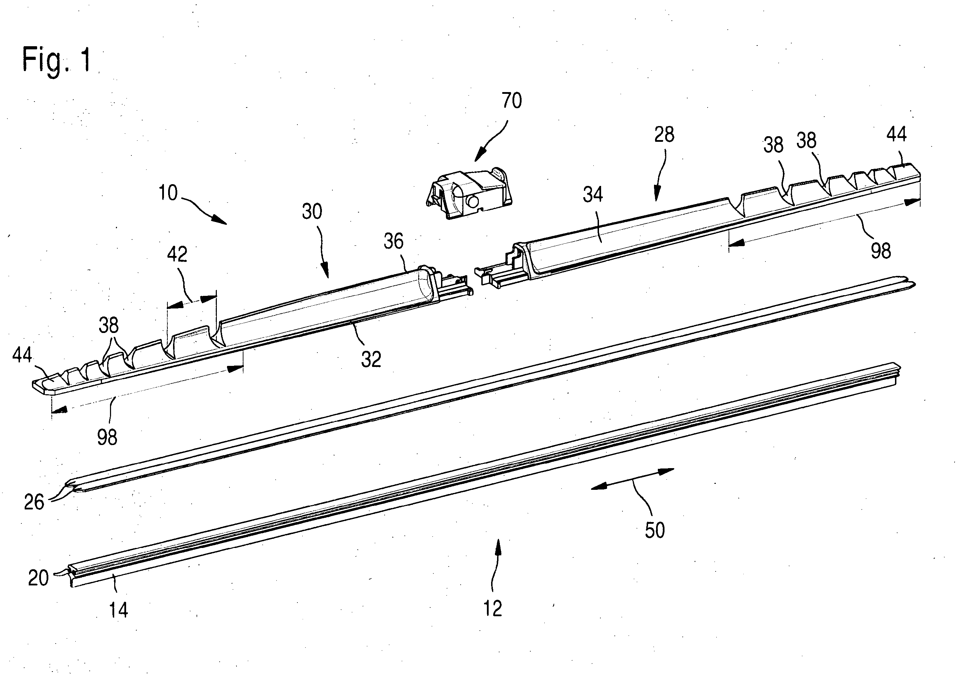

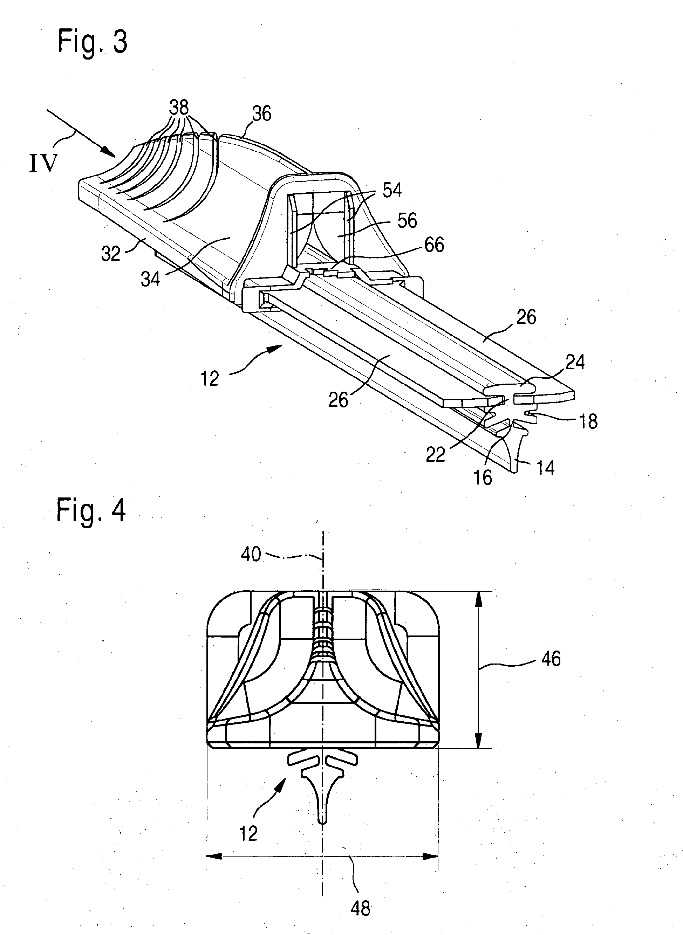

Das Wischblatt 10 nach Fig. 1 besitzt eine Wischleiste 12 mit einer Wischlippe 14, die über einen Kippsteg 16 mit einer Kopfleiste 18 verbunden ist. Die Kopfleiste 18 weist an ihren Längsseiten Längsnuten 20 auf, die zwischen sich einen Steg 22 bilden. Dieser verbindet eine nach außen weisende Rückenleiste 24 mit dem übrigen Teil der Kopfleiste 18. In die Längsnuten 20 ist jeweils eine Federschiene 26 eingesetzt. Auf den aus den Längsnuten 20 seitlich vorstehenden Teilen der Federschienen 26 sind Spoilerteile 28, 30 mittels Führungsschienen 32 mit geringem Spiel geführt. In Anströmrichtung des Fahrtwinds schließt sich an die Führungsschiene 32 bis zu einem Kamm 36 ein Strömungsprofil 34 an. Die Querschnittprofile der Spoilerteile 28, 30 nehmen zu ihren äußeren Enden in der Höhe 46 und in der Breite 48 ab (Fig. 4). Ferner kann sich die Materialstärke der Spoilerteile 28, 30 zu diesen Enden hin ebenfalls verringern. Durch diese Maßnahmen wird die Nachgiebigkeit der Spoilerteile 28, 30 verbessert, sodass der maximale Anpressdruck der Federschiene 26 auf die Enden der Wischleiste 12 wirkt. Wie aus Fig. 4 hervorgeht, ist das Querschnittprofil des Spoilerteils. 28, 30 symmetrisch zu einer Längsmittelebene 40 aufgebaut.

Die Spoilerteile 28, 30 weisen an ihren Enden Endkappen 44, 84 auf, wobei die Endkappe 44 nach Fig. 1 einstückig an die Spoilerteile 28, 30 angeformt ist, während die Endkappen 84 separate Bauteile darstellen und bei der Montage mit den Spoilerteilen 28, 30 oder der Federschiene 26 verbunden werden. Die Spoilerteile 28, 30 besitzen in Endbereichen 98 Aussparungen 38, deren Abstände 42 voneinander zu den äußeren Enden der Spoilerteile 28, 30 geringer werden, sodass die Anzahl der Aussparungen 38 pro Längeneinheit zu den Enden hin zunimmt. Die Aussparungen 38 verlaufen quer zur Längsrichtung 50 des Wischblatts 10 und erstrecken sich von dem Bereich der Führungsschienen 32 bis zum Kamm 36. Zweckmäßigerweise bilden die Aussparungen 38 Kerben, die sich zum Kamm 36 hin erweitern.

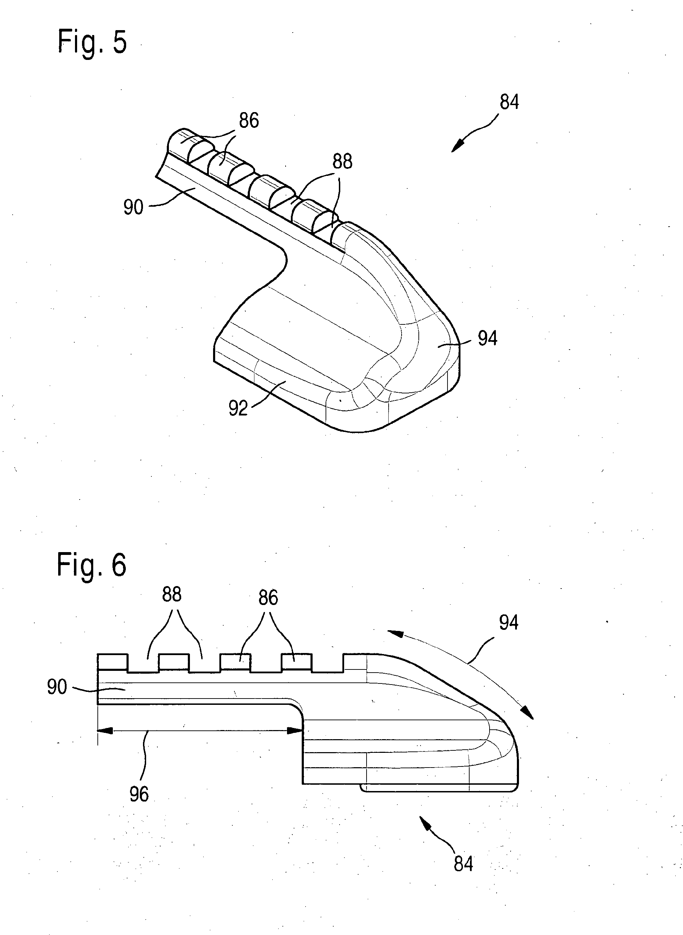

Fig. 5 und Fig. 6 zeigen eine separate Endkappe 84 mit Aussparungen 88 im Bereich eines Kamms 86 der Endkappe 84. Diese besitzt einen Fortsatz 90, der in Längsrichtung 50 auf die Mitte des Wischblatts 10 zu gerichtet ist. Der Fortsatz 90 hat die Länge 96, die etwa der Länge der übrigen Endkappe 84 entspricht. Die Aussparungen 88 befinden sich im Bereich des Fortsatzes 90 und können sich ebenfalls über den Stirnwandbereich 94 der Endkappe 84 erstrecken. Die Endkappe 84 sitzt mit einem Führungsteil 92 auf den Federschienen 26.

Die Spoilerteile 28, 30 besitzen an den einander zugewandten Enden Abschlusswände 52, an die sich Vorsprünge 58 anschließen, die die Führungsschienen 32 verlängern. An den einander zugewandten Enden der Vorsprünge 58 der Spoilerteile 28, 30 befindet sich an einer Trennfuge 64 jeweils ein Rasthaken 66, der mit einem Vorsprung 68 des jeweils anderen Spoilerteils 28, 30 eine Klippverbindung 66, 68 bildet. Zur Sicherung der Klippverbindung 66, 68 dient ein durch die Trennfuge 64 geteilter Nocken 62 an den Seitenwangen 60 der Vorsprünge 58. Die Hälften der Nocken 62 werden durch eine Aussparung 74 in Seitenwänden 72 eines Anschlusselements 70 blockiert. Das Anschlusselement 70 wird quer zum Wischblatt 10 über die Vorsprünge 58 montiert. Dabei wird es relativ zu den Spoilerteilen 28, 30 durch Führungsrippen 54 an den Stirnseiten der Abschlusswände 52 und durch entsprechende Schlitze 80 in den Stirnwänden des Anschlusselements 70 geführt.

Zwischen den Schlitzen 80 wird eine Federzunge 76 mit einem Rasthaken 78 gebildet, der bei der Montage in ein Fenster 56 zwischen den Führungsrippen 54 an den Abschlusswänden 52 einrastet. Somit sichert das Anschlusselement 70 den Zusammenhalt zwischen den Spoilerteilen 28, 30 dauerhaft. Das Anschlusselement 70 besitzt ein Gelenkelement in einer Form einer Nabe 82, um das Wischblatt 10 gelenkig mit einem nicht näher dargestellten Wischarm zu verbinden.

Je nach Einsatzbedingungen kann es ausreichen, dass lediglich eine Endkappe 44 oder 84 an dem einer Rotationsachse des Scheibenwischers benachbarten Ende des Wischblatts 10 Aussparungen 38, 88 aufweist. Bei anderen Einsatzfällen kann es jedoch zweckmäßig sein, die Aussparungen 38, 88 über einen mehr oder weniger großen Endbereich 98 in der beschriebenen Weise anzuordnen, um die gewünschten Ziele zu erreichen.

## Patentansprüche

1. Wischblatt (10) mit mindestens einer lang gestreckten, gekrümmten Federschiene (26), mit einer Wischleiste (12) und mit einem Anschlusselement (70), an das sich zu beiden Seiten der Spoilerteile (28, 30) in Längsrichtung (50) anschließen, wobei in den Spoilerteilen (28, 30) Aussparungen (38, 88) vorgesehen sind, und wobei die Aussparungen (38, 88) überwiegend in den äußeren Endbereichen (98) der Spoilerteile (28, 30) angeordnet sind, **dadurch gekennzeichnet, dass** die Aussparungen (38, 88) in einen Kamm (86) mindestens einer Endkappe (84) der Spoilerteile (28, 30) eingearbeitet sind.

2. Wischblatt (10) nach Anspruch 1, **dadurch gekennzeichnet, dass** die Endkappen (84) Fortsätze (90) in Längsrichtung (50) aufweisen, die an ihren Kämmen (86) ebenfalls Aussparungen (38, 88) besitzen, wobei die Endkappen (84) die Spoilerteile (28, 30) zu den äußeren Enden hin abschließen und die Fortsätze (90) die Spoilerteile (28, 30) in Längsrichtung (50) überdecken.

3. Wischblatt (10) nach Anspruch 2, **dadurch gekennzeichnet, dass** die Länge (96) der Fortsätze (90) ungefähr der Länge der übrigen Endkappe (84) entspricht.

4. Wischblatt (10) nach einem der vorhergehenden Ansprüche, **dadurch gekennzeichnet, dass** die Aussparungen (38) sich zum Kamm (36) der Spoilerteile (28, 30) erweiternde Kerben sind, deren Abstand (42) voneinander zum Ende des Spoilerteils (28, 30) kleiner wird.

5. Wischblatt (10) nach einem der vorhergehenden Ansprüche, **dadurch gekennzeichnet, dass** die Endkappen (44) an den Spoilerteilen (28, 30) einstückig angeformt sind.

6. Wischblatt (10) nach einem der vorhergehenden Ansprüche, **dadurch gekennzeichnet, dass** die Höhe (46) und/oder die Breite (48) und/oder die Materialstärke der Spoilerteile (28, 30) zum Ende des Wischblatts (10) abnehmen.

7. Wischblatt (10) nach einem der vorhergehenden Ansprüche, **dadurch gekennzeichnet, dass** die Spoilerteile (28, 30) an den einander zugewandten Abschlusswänden (52) Vorsprünge (58) besitzen, die über Rastmittel (66, 68) miteinander verbunden sind.

8. Wischblatt (10) nach einem der vorhergehenden Ansprüche, **dadurch gekennzeichnet, dass** die Spoilerteile (28, 30) an den einander zugewandten Abschlusswänden (52) Vorsprünge (68) besitzen, die an einer Trennfuge (64) im Bereich von Seitenwangen (60) seitlich vorstehende Nocken (62) haben, die in eine Aussparung (74) eines Anschlusselements (70) passen, das über die Seitenwangen (60) zwischen die Abschlusswände (52) montiert ist.

9. Wischblatt (10) nach Anspruch 8, **dadurch gekennzeichnet, dass** an den Abschlusswänden (52) einander zugewandte Führungsrippen (54) angeordnet sind, die in Schlitze (80) des Anschlusselements (70) eingreifen.

10. Wischblatt (10) nach Anspruch 9, **dadurch gekennzeichnet, dass** zwischen den Schlitzen (80) Federzungen (76) mit Rasthaken (78) an dem Anschlusselement (70) angeformt sind, die bei der Montage in Fenster (56) in den Abschlusswänden (52) einrasten.

## Claims

1. Wiper blade (10) with at least one elongate, curved spring rail (26), with a wiper strip (12) and with a connecting element (70) to which the spoiler parts (28, 30) are connected on both sides in the longitudinal direction (50), wherein recesses (38, 88) are provided in the spoiler parts (28, 30), and wherein the recesses (38, 88) are predominantly arranged in the outer end regions (98) of the spoiler parts (28, 30), **characterized in that** the recesses (38, 88) are incorporated into a vertebra (86) of at least one end cap (84) of the spoiler parts (28, 30).

2. Wiper blade (10) according to Claim 1, **characterized in that** the end caps (84) have extensions (90) in the longitudinal direction (50), which likewise have recesses (38, 88) on the vertebrae (86) thereof, wherein the end caps (84) close off the spoiler parts (28, 30) towards the outer ends, and the extensions (90) cover the spoiler parts (28, 30) in the longitudinal direction (50).

3. Wiper blade (10) according to Claim 2, **characterized in that** the length (96) of the extensions (90) approximately corresponds to the length of the rest of the end cap (84).

4. Wiper blade (10) according to one of the preceding claims, **characterized in that** the recesses (38) are notches which widen with respect to the vertebra (36) of the spoiler parts (28, 30), and the distance (42) of which from one another becomes smaller at the end of the spoiler part (28, 30).

5. Wiper blade (10) according to one of the preceding claims, **characterized in that** the end caps (44) are integrally formed on the spoiler parts (28, 30).

6. Wiper blade (10) according to one of the preceding claims, **characterized in that** the height (46) and/or the width (48) and/or the material thickness of the spoiler parts (28, 30) decrease at the end of the wiper blade (10).

7. Wiper blade (10) according to one of the preceding claims, **characterized in that** the mutually facing end walls (52) of the spoiler parts (28, 30) have projections (58) which are connected to one another via latching means (66, 68).

8. Wiper blade (10) according to one of the preceding claims, **characterized in that** the mutually facing end walls (52) of the spoiler parts (28, 30) have projections (68) which, at a separating gap (64) in the region of side members (60), have laterally projecting cams (62) which fit into a recess (74) in a connecting element (70) which is mounted over the side members (60) between the end walls (52).

9. Wiper blade (10) according to Claim 8, **characterized in that** mutually facing guide ribs (54) which engage in slots (80) of the connecting element (70) are arranged on the end walls (52).

10. Wiper blade (10) according to Claim 9, **characterized in that**, between the slots (80), spring tongues (76) having latching hooks (78) are integrally formed on the connecting element (70), the latching hooks latching into apertures (56) in the end walls (52) during the assembly.

## Revendications

1. Balai d'essuie-glace (10) comprenant au moins un rail élastique courbe allongé (26), une raclette de balai d'essuie-glace (12) et un élément de raccordement (70) auquel se raccordent, des deux côtés, les parties de déflecteur (28, 30) dans la direction longitudinale (50), des évidements (38, 88) étant réalisés dans les parties de déflecteur (28, 30), et les évidements (38, 88) étant disposés essentiellement dans les régions d'extrémité extérieures (98) des parties de déflecteur (28, 30), **caractérisé en ce que** les évidements (38, 88) sont pratiqués sur la crête (86) d'au moins un embout d'extrémité (84) des parties de déflecteur (28, 30).

2. Balai d'essuie-glace (10) selon la revendication 1, **caractérisé en ce que** les embouts d'extrémité (84) présentent des saillies (90) dans la direction longitudinale (50), lesquelles possèdent également des évidements (38, 88) au niveau de leurs crêtes (86), les embouts d'extrémité (84) terminant les parties de déflecteur (28, 30) au niveau des extrémités extérieures et les saillies (90) recouvrant les parties de déflecteur (28, 30) dans la direction longitudinale (50).

3. Balai d'essuie-glace (10) selon la revendication 2, **caractérisé en ce que** la longueur (96) des saillies (90) correspond approximativement à la longueur de l'embout d'extrémité restant (84).

4. Balai d'essuie-glace (10) selon l'une quelconque des revendications précédentes, **caractérisé en ce que** les évidements (38) sont des encoches s'élargissant vers la crête (36) des parties de déflecteur (28, 30), dont l'espacement (42) les unes des autres devient de plus en plus petit vers l'extrémité de la partie de déflecteur (28, 30).

5. Balai d'essuie-glace (10) selon l'une quelconque des revendications précédentes, **caractérisé en ce que** les embouts d'extrémité (44) sont façonnés d'une seule pièce sur les parties de déflecteur (28, 30).

6. Balai d'essuie-glace (10) selon l'une quelconque des revendications précédentes, **caractérisé en ce que** la hauteur (46) et/ou la largeur (48) et/ou l'épaisseur de matériau des parties de déflecteur (28, 30) diminuent vers l'extrémité du balai d'essuie-glace (10).

7. Balai d'essuie-glace (10) selon l'une quelconque des revendications précédentes, **caractérisé en ce que** les parties de déflecteur (28, 30) possèdent des saillies (58) au niveau des parois de terminaison (52) tournées l'une vers l'autre, lesquelles saillies sont connectées l'une à l'autre par le biais de moyens d'encliquetage (66, 68) .

8. Balai d'essuie-glace (10) selon l'une quelconque des revendications précédentes, **caractérisé en ce que** les parties de déflecteur (28, 30) possèdent des saillies (68) au niveau des parois de terminaison (52) tournées l'une vers l'autre, lesquelles saillies présentent des cames saillant latéralement (62) au niveau d'un joint de séparation (64) dans la région de joues latérales (60), lesquelles cames s'adaptent dans un évidement (74) d'un élément de raccordement (70) qui est monté par le biais des joues latérales (60) entre les parois de terminaison (52).

9. Balai d'essuie-glace (10) selon la revendication 8, **caractérisé en ce que** des nervures de guidage (54) tournées l'une vers l'autre sont disposées au niveau des parois de terminaison (52), lesquelles nervures de guidage viennent en prise dans des fentes (80) de l'élément de raccordement (70).

10. Balai d'essuie-glace (10) selon la revendication 9, **caractérisé en ce qu'**entre les fentes (80) sont façonnées des langues élastiques (76) avec des crochets d'encliquetage (78) au niveau de l'élément de raccordement (70), qui s'encliquètent lors du montage dans des fenêtres (56) dans les parois de terminaison (52).
